# EUROPEAN PATENT APPLICATION

(11) **EP 4 742 318 A1**
(43) Date of publication of application: **13.05.2026**
(21) Application number: 23946461.3
(22) Date of filing: 23.11.2023
(51) Int. Cl.: H01M 4/36, H01M 4/62, H01M 10/0525

(54) **COMPOSITE MATERIAL AND PREPARATION METHOD THEREFOR, POSITIVE ELECTRODE SHEET, BATTERY CELL, BATTERY, AND ELECTRIC DEVICE**

(30) Priority: 24.07.2023 CN 202310910441
(71) Applicant: Contemporary Amperex Technology Co., Limited, Ningde, Fujian 352100 (CN)
(72) Inventor: WANG, Bangrun, Ningde, Fujian 352100 (CN); ZHANG, Xingwen, Ningde, Fujian 352100 (CN); LIU, Na, Ningde, Fujian 352100 (CN)
(74) Representative: Lorenz Seidler Gossel Part. mbB
(86) International application number: PCT/CN2023/133597
(87) International publication number: WO 2025/020382

(57) **Abstract**

A composite material and a preparation method therefor, a positive electrode plate, a cell, a battery, and an electric device belong to the field of battery technologies. A composite material includes a lithium-containing compound, a catalyst, and a carbon material. The carbon material has a hollow tubular structure, and the lithium-containing compound and the catalyst are arranged in the tubular structure. The lithium-containing compound includes lithium, carbon, and oxygen. The catalyst includes at least one of a transition metal oxide, a transition metal carbide, or a transition metal nitride. Technical solutions of embodiments of this application can improve a capacity of a cell.

## Description

### CROSS-REFERENCE TO RELATED APPLICATIONS

This application claims priority to Patent Application No. 202310910441.4, entitled "COMPOSITE MATERIAL AND PREPARATION METHOD THEREFOR, POSITIVE ELECTRODE PLATE, CELL, BATTERY, AND ELECTRIC DEVICE" filed on July 24, 2023, which is incorporated by reference in its entirety.

### TECHNICAL FIELD

This application relates to the field of battery technologies, and in particular, to a composite material and a preparation method therefor, a positive electrode plate, a cell, a battery, and an electric device.

### BACKGROUND

With the increasing severity of environmental pollution, the new energy industry has attracted more and more attention. In the new energy industry, the battery technology is an important factor affecting its development.

In the development of battery technologies, various design factors, such as a capacity, an energy density, a cycle life, and reliability, need to be taken into account. In a first charge and discharge process of a cell, a solid electrolyte interface SEI film is produced on a surface of a negative electrode, and the presence of the SEI film consumes a large quantity of lithium ions, affecting a capacity of the cell. Therefore, how to provide a composite material to supplement lithium ions, to improve the capacity of the cell, is a technical problem that needs to be resolved urgently.

### SUMMARY

This application is made in view of the foregoing problems, and an objective thereof is to provide a composite material, to improve a capacity of a cell.

To achieve the foregoing objective, this application provides a composite material and a preparation method therefor, a positive electrode plate, a cell, a battery, and an electric device.

According to a first aspect, a composite material is provided, including: a lithium-containing compound, a catalyst, and a carbon material, where the carbon material has a hollow tubular structure, and the lithium-containing compound and the catalyst are arranged in the tubular structure; the lithium-containing compound includes lithium, carbon, and oxygen; and the catalyst includes at least one of a transition metal oxide, a transition metal carbide, or a transition metal nitride.

In this embodiment of this application, the lithium-containing compound can decompose to produce lithium ions and gas, to supplement lithium ions to the battery. The catalyst may catalyze decomposition of the lithium-containing compound. The carbon material has a hollow tubular structure, and the lithium-containing compound and the catalyst are arranged in the tubular structure, which is conducive to improving the capacity of the battery. Therefore, technical solutions of embodiments of this application can improve the capacity of the cell.

In a possible implementation, the lithium-containing compound and the catalyst are arranged on an inner wall of the tubular structure. In this way, the lithium-containing compound and the catalyst can be better arranged in the tubular structure, thereby reducing a risk that the lithium-containing compound and the catalyst escape from the tubular structure when the composite material is short.

In a possible implementation, at least a part of the catalyst is located on a surface of the lithium-containing compound, which helps the catalyst to catalyze decomposition of the lithium-containing compound.

In a possible implementation, a chemical formula of the lithium-containing compound is Li₂CₓO_{y}, where 1≤x≤4, and 3≤y≤6; and optionally, the lithium-containing compound includes at least one of Li₂C₂O₄, Li₂CO₃, Li₂C₄O₄, Li₂C₃O₅, or Li₂C₄O₆. The foregoing lithium-containing compound may decompose into lithium ions and gas (such as carbon monoxide and carbon dioxide) under the action of a voltage and the catalyst, and the lithium ions produced through decomposition may play a role in supplementing lithium ions, which is conducive to improving a capacity of the battery. The gas produced through decomposition does not remain in the positive electrode plate, and performance, such as long-term reliability, of the cell is not affected by residues produced through decomposition. In addition, the foregoing lithium-containing compound has good stability, can stably exist in air and an organic solvent, and is compatible with a film coating process for a positive electrode slurry.

In a possible implementation, a chemical formula of the transition metal oxide is M_{α}O_{β}, where 0<α≤3, 0<β≤5, and M includes at least one of Ni, Co, Fe, Mn, V, Cr, Cu, or Ti; and optionally, M_{α}O_{β} includes at least one of NiO, Co₃O₄, Fe₂O₃, MoO₃, or V₂O₅. The foregoing catalyst can lower a decomposition voltage of the lithium-containing compound, so that the lithium-containing compound decomposes at a lower voltage.

In a possible implementation, the transition metal carbide includes at least one of molybdenum carbide, vanadium carbide, tungsten carbide, titanium carbide, cobalt carbide, iron carbide, or nickel carbide; and/or the transition metal nitride includes at least one of molybdenum nitride, vanadium nitride, titanium nitride, manganese nitride, cobalt nitride, iron nitride, or nickel nitride. The foregoing transition metal carbide and transition metal nitride have a good catalytic effect, and can catalyze decomposition of the lithium-containing compound.

In a possible implementation, based on a total mass of the composite material, a mass content A of the carbon material satisfies: 1wt%≤A≤40wt%; and optionally, A satisfies: 2wt%≤A≤25wt%.

When the mass content A of the carbon material is not less than 1wt%, the carbon material may completely wrap the catalyst and the lithium-containing compound, and the composite material has high conductivity, which is conducive to improving the capacity of the cell. When the mass content A of the carbon material does not exceed 40wt%, the carbon material has a proper mass ratio, and the catalyst and the lithium-containing compound also have proper mass ratios, which is conducive to improving the capacity of the cell.

In a possible implementation, based on a total mass of the composite material, a mass content B of the catalyst satisfies: 0.1wt%≤B≤20wt%; and optionally, B satisfies: 0.5wt%≤B≤10wt%.

When the mass content B of the catalyst is not less than 0.1wt%, a contact area between the catalyst and the lithium-containing compound is proper, and the catalyst has a good catalytic effect, which is conducive to catalyzing decomposition of the lithium-containing compound and improving the capacity of the cell. When the mass content B of the catalyst does not exceed 20wt%, it helps add a larger quantity of the lithium-containing compound to the composite material, which is conducive to improving the capacity of the cell.

In a possible implementation, based on a total mass of the composite material, a mass content C of the lithium-containing compound satisfies: 45wt%≤B≤98.9wt%; and optionally, C satisfies: 70wt%≤B≤85wt%.

When the mass content C of the lithium-containing compound is not less than 45wt%, because a content of the lithium-containing compound is large, a large quantity of lithium ions can be produced through decomposition, so that more lithium ions can be supplemented to the negative electrode, which is conducive to improving the capacity of the cell. When the mass content C of the lithium-containing compound does not exceed 98.9wt%, the carbon material and the catalyst in the composite material have specific mass contents, which is conducive to taking all of the decomposition voltage of the lithium-containing compound, the conductivity of the composite material, and a quantity of lithium ions decomposed from the lithium-containing compound into account, thereby obtaining a higher battery capacity.

In a possible implementation, an aspect ratio E of the carbon material satisfies: 100:1≤E≤3000:1; and optionally, E satisfies: 200:1≤E≤2000:1.

When the aspect ratio E of the carbon material is not less than 100:1, the composite material has a good conductive effect. When the aspect ratio E of the carbon material does not exceed 3000:1, which not only is conducive to synthesis of the carbon material, but also can reduce a risk of agglomeration of the carbon material, thereby reducing a risk of a small increase in the capacity of the cell due to agglomeration of the carbon material.

In a possible implementation, in the composite material, a decomposition voltage V1 of the lithium-containing compound satisfies: V1<4.8 V; and optionally, V1 satisfies: V1<4.4 V. In this way, the lithium-containing compound can decompose at a lower voltage to supplement the negative electrode with lithium, which can reduce a risk of a structural change in the positive electrode active material caused by a high voltage, and is conducive to improving stability and cycle performance of the cell.

In a possible implementation, a resistivity P of the composite material satisfies: 0.2 Ω·cm<P<101 Ω·cm; and optionally, P satisfies: 0.2 Ω·cm<P<5.5 Ω·cm. In this way, the composite material has a proper resistivity, so that the positive electrode plate has proper conductive performance, and the cell has a proper capacity.

In a possible implementation, an average volume particle size Dv¹50 of the lithium-containing compound is greater than an average volume particle size Dv²50 of the catalyst. In this way, the catalyst is attached to a surface of the lithium-containing compound to help catalyze decomposition of the lithium-containing compound. Optionally, the average volume particle size Dv¹50 of the lithium-containing compound satisfies: 100 nm≤Dv¹50≤1000 nm, and the average volume particle size Dv²50 of the catalyst satisfies: 50 nm≤Dv²50≤500 nm. In this way, this is conducive to increasing specific surface areas of the lithium-containing compound and the catalyst, and increasing the contact area between the lithium-containing compound and the catalyst, thereby improving the effect of the catalyst on catalyzed decomposition of the lithium-containing compound. In addition, since a catalytic effect of the catalyst is improved, a requirement for the mass ratio of the catalyst in the composite material is lowered. When a mass content of the catalyst is small, the decomposition voltage of the lithium-containing compound can be reduced. In addition, it is also conducive to increasing mass contents of the lithium-containing compound and the carbon material in the composite material, to improve an energy density of the cell.

In a possible implementation, a difference between an average volume particle size Dv'50 of the lithium-containing compound and an average volume particle size Dv²50 of the catalyst ranges from 50 nm to 1000 nm. In this way, it helps the catalyst to attach to the surface of the lithium-containing compound, thereby facilitating decomposition of the lithium-containing compound.

According to a second aspect, a preparation method for the composite material according to the first aspect and any possible implementation thereof is provided, including: mixing a lithium-containing compound and a catalyst to obtain a mixed material of the lithium-containing compound and the catalyst, where the catalyst includes at least one of a transition metal oxide, a transition metal carbide, or a transition metal nitride, and the lithium-containing compound includes lithium, carbon, and oxygen; adding the mixed material of the lithium-containing compound and the catalyst into a polymer material-containing slurry, to obtain an electrospinning stock solution; performing electrospinning on the electrospinning stock solution, to obtain a precursor; and performing calcination of the precursor in an inert atmosphere to obtain the composite material. Through the foregoing method, the composite material according to this embodiment of this application can be prepared, and the composite material helps improve the capacity of the cell.

In a possible implementation, a chemical formula of the lithium-containing compound is Li₂CₓO_{y}, where 1≤x≤4, and 3≤y≤6; and optionally, the lithium-containing compound includes at least one of Li₂C₂O₄, Li₂CO₃, Li₂C₄O₄, Li₂C₃O₅, or Li₂C₄O₆.

In a possible implementation, a chemical formula of the transition metal oxide is M_{α}O_{β}, where 0<α≤3, 0<β≤5, and M includes at least one of Ni, Co, Fe, Mn, V, Cr, Cu, or Ti; and optionally, M_{α}O_{β} includes at least one of NiO, Co₃O₄, Fe₂O₃, MoO₃, or V₂O₅.

In a possible implementation, the transition metal carbide includes at least one of molybdenum carbide, vanadium carbide, tungsten carbide, titanium carbide, cobalt carbide, iron carbide, or nickel carbide; and/or the transition metal nitride includes at least one of molybdenum nitride, vanadium nitride, titanium nitride, manganese nitride, cobalt nitride, iron nitride, or nickel nitride.

In a possible implementation, a solute in the polymer material-containing slurry includes a polymer material, and a solvent in the polymer material-containing slurry is an organic solvent; and optionally, the organic solvent includes N,N-dimethylformamide. The polymer material has good solubility in an organic solvent. After polymer powder is added to the organic solvent, the foregoing solution can be conveniently prepared. N,N-dimethylformamide has good stability, so the foregoing slurry has good performance.

In a possible implementation, a mass ratio D of the polymer material to the N,N-dimethylformamide satisfies: 1:20≤D≤1:1; and optionally, D satisfies: 1:10≤D≤1:5. When D is not less than 1:20, the polymer material and the N,N-dimethylformamide have a proper mass ratio, which facilitates the smooth progress of electrospinning and reduces difficulty of the electrospinning. When D does not exceed 1:1, a risk of a dilute electrospinning stock solution due to more N,N-dimethylformamide and less polymer material can be reduced, thereby reducing a risk of composite material breakage during subsequent calcination. By properly setting a value of D, smooth electrospinning and preparation of the composite material are facilitated.

In a possible implementation, the polymer material includes at least one of polyvinyl pyrrolidone, polyacrylonitrile, or polyethylene oxide; and optionally, the polymer material includes polyacrylonitrile.

In a possible implementation, a temperature T of the calcination satisfies: 300°C≤T≤480°C; and optionally, T satisfies: 350°C≤T≤450°C. In this way, it not only is conducive to achieving sufficient carbonization of the polymer material, but also can reduce a risk of thermal decomposition of the lithium-containing compound due to an excessively high temperature, thereby facilitating preparation of the carbon material with a hollow tubular structure in the composite material.

In a possible implementation, the mixing a lithium-containing compound and a catalyst to obtain a mixed material of the lithium-containing compound and the catalyst includes: mixing the lithium-containing compound and the catalyst and performing high-energy ball milling, to obtain the mixed material including the lithium-containing compound and the catalyst. Through high-energy ball milling, a lithium-containing compound with a smaller particle size and a catalyst with a smaller particle size can be obtained, which is conducive to making mixing of the lithium-containing compound and the catalyst more evenly, and is conducive to increasing specific surface areas of the lithium-containing compound and the catalyst, thereby helping improve the catalytic effect of the catalyst.

In a possible implementation, a ball-to-material ratio F of the high-energy ball milling satisfies: 10:1≤F≤15:1; and/or a revolution speed R1 of the high-energy ball milling satisfies: 1000 r/min≤R1≤1500 r/min; and/or a rotation speed R2 of the high-energy ball milling satisfies: 2500 r/min≤R2≤ 3000 r/min. In this way, the high-energy ball milling has proper process parameters, which helps obtain a lithium-containing compound with a proper particle size and a catalyst with a proper particle size.

In a possible implementation, a mass ratio C of the lithium-containing compound to the catalyst satisfies: 15:1≤C≤40:1. In this way, the lithium-containing compound and the catalyst have a proper mass ratio, and the lithium-containing compound can decompose more fully under the action of the catalyst, which is conducive to improving the capacity of the cell.

In a possible implementation, an average volume particle size Dv¹50 of the lithium-containing compound is greater than an average volume particle size Dv²50 of the catalyst; and the average volume particle size Dv¹50 of the lithium-containing compound satisfies: 100 nm≤Dv¹50≤1000 nm, and the average volume particle size Dv²50 of the catalyst satisfies: 50 nm≤Dv²50≤500 nm.

In a possible implementation, in the electrospinning, a voltage is 15 kV, a propulsion speed of the electrospinning stock solution is 0.2 mL/min, a receiving distance is 15 cm, and a spinning time is 12 h. In this way, the composite material is conveniently prepared through proper preparation process parameters.

According to a third aspect, a positive electrode plate is provided, including a positive electrode active material; and the composite material according to the first aspect and any possible implementation thereof, and/or a composite material prepared by using the method according to the second aspect and any possible implementation thereof.

In a possible implementation, a resistance R of the positive electrode plate satisfies: 0.3 Q<R<0.5 Q. In this way, the positive electrode plate has proper conductivity, and the cell has a proper capacity.

According to a fourth aspect, a cell is provided, including the positive electrode plate according to the third aspect and any possible implementation thereof.

According to a fifth aspect, a battery is provided, including the cell according to the fourth aspect.

According to a sixth aspect, an electric device is provided, including the battery according to the fifth aspect.

### BRIEF DESCRIPTION OF THE DRAWINGS

To describe the technical solutions in embodiments of this application more clearly, the following briefly describes the accompanying drawings required for the embodiments of this application. Apparently, the accompanying drawings in the following description show merely some embodiments of this application, and a person of ordinary skill in the art may still derive other accompanying drawings from the accompanying drawings without creative efforts.
FIG. 1 is a schematic diagram of a composite material according to an embodiment of this application;
FIG. 2 is a schematic diagram of a preparation method for a composite material according to an embodiment of this application;
FIG. 3 is a schematic diagram of a cell according to an embodiment of this application.
FIG. 4 is a schematic diagram of a battery according to an embodiment of this application; and
FIG. 5 is a schematic diagram of an electric device according to an embodiment of this application.

### DETAILED DESCRIPTION

Implementations specifically disclosing a composite material, a preparation method therefor, a positive electrode plate, a cell, a battery, and an electric device of this application are disclosed in detail by properly referring to the accompanying drawings. However, there may be situations where unnecessary detailed explanations may be omitted. For example, there are situations where detailed explanations of well-known matters are omitted and repeated explanations of the same structure are actually provided. This is to avoid unnecessary redundancy in the subsequent descriptions and to facilitate understanding by a person skilled in the art. In addition, the accompanying drawings and the following description are provided for a person skilled in the art to fully understand this application and are not intended to limit the subject matter recorded in the claims.

The "ranges" disclosed in this application are defined in the form of lower and upper limits, with a given range being defined by the selection of a lower limit and an upper limit defining the boundaries of the particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In this application, unless otherwise stated, a value range of "a to b" represents an abbreviated representation of any combination of real numbers between a and b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer≥2, it is equivalent to disclosing that the parameter is, for example, an integer of 2, 3, 4, 5, 6, 7, 8, 9, 10, 11, 12, or the like.

If there is no special explanation, all implementation methods and optional implementation methods of this application can be combined to form new technical solutions.

Unless otherwise specified, all technical features and optional technical features of this application can be combined to form new technical solutions.

Unless otherwise specified, all the steps in this application can be performed in the order described or in a random order, and preferably in the order described. For example, the phrase "the method includes step (a) and step (b)" indicates that the method may include step (a) and step (b) performed sequentially, or the method may include step (b) and step (a) performed sequentially. For example, reference to "the method may further include step (c)" indicates that step (c) may be added to the method in any order, for example, the method may include steps (a), (b), and (c), or may include steps (a), (c), and (b), or may include steps (c), (a), and (b), and the like.

In the development of battery technologies, various design factors, such as a capacity, an energy density, a cycle life, and reliability, need to be taken into account. In a first charge and discharge process of a cell, a solid electrolyte interface SEI film is produced on a surface of a negative electrode, and the presence of the SEI film consumes a large quantity of lithium ions, affecting a capacity of the cell. To improve the capacity of the cell, an additive is added to the positive electrode slurry. The additive includes Li₂C₂O₄ and NiₓO, where 0.67≤x≤1. Under the catalytic action of NiₓO, Li₂C₂O₄ in the additive can decompose to produce lithium ions under a lower voltage condition, to complete lithium supplementation of the negative electrode while also reducing a risk of an irreversible structural change in the positive electrode active material under a high charge voltage condition. However, after Li₂C₂O₄ decomposes, holes are left at original positions of Li₂C₂O₄, causing damage to a conductive network of the positive electrode plate, and affecting transmission of ions and electrons, which is adverse to improving the capacity of the cell. In addition, conductivity of Li₂C₂O₄ is poor, which is adverse to improving the capacity of the cell.

In view of this, an embodiment of this application provides a composite material. In the composite material, the lithium-containing compound and the catalyst are arranged in a tubular structure of a carbon material having a hollow tubular structure. In this way, impact of vacancies produced after the lithium-containing compound decomposes on ion transmission performance and electron transmission performance of the positive electrode plate can be reduced, and arrangement of the carbon material is also conducive to improving the conductivity of the composite material. Therefore, the composite material according to this embodiment of this application can improve the capacity of the battery.

The composite material in this embodiment of this application can be used as a lithium supplement, that is, can supplement lithium ions consumed by the negative electrode. In an example, the composite material can be mixed with a positive electrode active material, to prepare a positive electrode slurry for use.

The cell in this embodiment of this application may be used as a minimum unit of a battery. The cell includes a positive electrode plate, a negative electrode plate, a separator, an electrolyte, and the like.

### [Composite material]

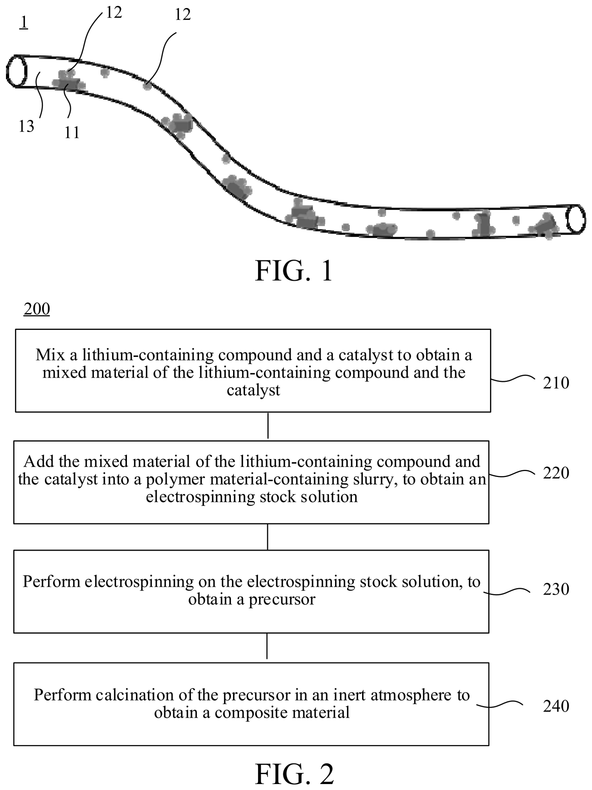

FIG. 1 is a schematic diagram of a composite material according to an embodiment of this application. As shown in FIG. 1, a composite material 1 includes a lithium-containing compound 11, a catalyst 12, and a carbon material 13.

The carbon material 13 has a hollow tubular structure, and the lithium-containing compound 11 and the catalyst 12 are arranged in the tubular structure.

The lithium-containing compound 11 and the catalyst 12 may be arranged in the tubular structure and not in contact with an inner wall of the tubular structure, or may be arranged on an inner wall of the tubular structure.

The carbon material 13 is carbon tubes, for example, nano-scale carbon tubes. The carbon material 13 is in a fibrous shape, and the carbon material 13 may extend continuously in different directions.

The carbon material 13 may be an amorphous carbon material. In some embodiments, the carbon material 13 is a completely carbonized polymer material. That is, the carbon material 13 may include only carbon.

The lithium-containing compound 11 and the catalyst 12 are arranged in the tubular structure of the carbon material 13, which means that the lithium-containing compound 11 and the catalyst 12 are coated inside the carbon material 13, and the lithium-containing compound 11 and the catalyst 12 are not in direct contact with the outside (for example, the positive electrode active material).

Because the lithium-containing compound 11 is located in the tubular structure of the carbon material 13, and after the lithium-containing compound 11 decomposes, holes or vacancies left at original positions of the lithium-containing compound 11 are not directly reflected in the positive electrode plate, a risk that the conductive network of the positive electrode plate is destroyed is reduced, and transmission of electrons and ions in the positive electrode plate is less affected, thereby improving the capacity of the cell. In addition, after the lithium-containing compound 11 decomposes, vacancies or holes are left on an inner wall of the tubular structure of the carbon material 13. The vacancies can enhance infiltration of an electrolytic solution, and the electrolytic solution in the vacancies can provide channels for ion transmission, which is conducive to transmission of ions (such as lithium ions), and therefore, is conducive to improving the capacity of the battery.

The carbon material 13 has good electrical conductivity. By adding the carbon material 13 to the composite material 1, it is conducive to reducing the resistivity of the composite material 1 and improving the capacity of the cell.

The lithium-containing compound 11 includes lithium, carbon, and oxygen. The lithium-containing compound 11 may include an organic lithium-containing compound such as Li₂C₂O₄, or an inorganic lithium-containing compound such as Li₂CO₃.

The lithium-containing compound 1 can decompose under the action of a voltage into lithium ions and carbon oxides (such as CO and CO₂). Lithium ions produced through decomposition can supplement the negative electrode with lithium ions, thereby helping improve the capacity of the battery.

The catalyst 12 includes at least one of a transition metal oxide, a transition metal carbide, or a transition metal nitride. The catalyst 12 can lower a decomposition voltage of the lithium-containing compound 11.

The transition metal carbide and the transition metal nitride may be obtained by treating the transition metal oxide. The transition metal carbide may be molybdenum carbide or tungsten carbide, and the transition metal nitride may be molybdenum nitride or manganese nitride.

The transition metal oxide, the transition metal carbide, and the transition metal nitride not only have high conductivity, but also have abundant surface active sites and a high specific surface area, and can catalyze decomposition of the lithium-containing compound.

The transition metal oxide, the transition metal carbide, and the transition metal nitride can catalyze decomposition of the lithium-containing compound 11 under the action of a voltage, that is, can lower a decomposition voltage of the lithium-containing compound 11.

In an example, the catalyst is a transition metal oxide, for example, NiₓO, where 0.67≤x≤1, and this embodiment of this application includes, but is not limited to, this provided that decomposition of the lithium-containing compound can be catalyzed.

The composite material 1 is a fibrous material, and the composite material 1 and the carbon material 13 have the same shape.

In this embodiment of this application, the lithium-containing compound 11 can decompose under the action of a voltage to produce lithium ions and gas, to supplement lithium ions to the battery. The catalyst 12 can catalyze decomposition of the lithium-containing compound 11, so that the lithium-containing compound 11 decomposes at a lower voltage, thereby enabling the lithium-containing compound 11 to adapt to a plurality of positive electrode active materials. The carbon material 13 has a hollow tubular structure, and the lithium-containing compound 11 and the catalyst 12 are located in the tubular structure. In this way, after the lithium-containing compound 11 decomposes a risk that vacancies left after decomposition of the lithium-containing compound 11 damage the conduction network of the electrode plate is reduced, and the electrode plate has good ion transmission performance and electron transmission performance, thereby helping improve the capacity of the cell. In addition, vacancies left by the lithium-containing compound 11 in the tubular structure of the carbon material 13 further help increase infiltration of an electrolytic solution, which is conducive to transmission of ions, and therefore, is conducive to improving the capacity of the battery. Therefore, technical solutions of embodiments of this application can improve the capacity of the cell.

In some embodiments, the lithium-containing compound 11 and the catalyst 12 are arranged on an inner wall of the tubular structure. In this way, the lithium-containing compound and the catalyst can be better arranged in the tubular structure, thereby reducing a risk that the lithium-containing compound and the catalyst escape from the tubular structure when the composite material is short.

In some embodiments, at least a part of the catalyst 12 is located on a surface of the lithium-containing compound 11. In this way, the catalyst 12 located on the surface of the lithium-containing compound 11 can catalyze decomposition of the lithium-containing compound 11, and lower a decomposition voltage of the lithium-containing compound 11.

In the composite material 1, a part of the catalyst 12 may not be located on a surface of the lithium-containing compound 11, but is located in a tubular structure of the carbon material 13. Alternatively, all the catalyst 12 may be located on the surface of the lithium-containing compound 11.

In some embodiments, a chemical formula of the lithium-containing compound 11 is Li₂CₓO_{y}, where 1≤x≤4, and 3≤y≤6.

For the chemical formula Li₂CₓO_{y}, x and y satisfy the following relationship: x+y=2n and 2≤n≤5.

x may be 1, 2, 3, 4, or any value within the foregoing range, y may be 3, 4, 5, 6, or any value within the foregoing range, and n may be 2, 3, 4, 5, or any value within the foregoing range. In an example, x, y, and n are all positive integers.

The foregoing lithium-containing compound 11 may decompose into lithium ions and gas (such as carbon monoxide and carbon dioxide) under the action of a voltage 12 and the catalyst, and the lithium ions produced through decomposition may play a role in supplementing lithium ions, which is conducive to improving a capacity of the battery. The gas produced through decomposition does not remain in the positive electrode plate, and performance, such as long-term reliability, of the cell is not affected by residues produced through decomposition. In addition, the foregoing lithium-containing compound 11 has good stability, can stably exist in air and an organic solvent, and is compatible with a film coating process for a positive electrode slurry.

In an example, gas produced through decomposition of the lithium-containing compound 11 can be sucked out of the cell through a tool, such as a suction nozzle, in a formation step.

In some embodiments, the lithium-containing compound 11 includes at least one of Li₂C₂O₄, Li₂CO₃, Li₂C₄O₄, Li₂C₃O₅, or Li₂C₄O₆. The foregoing lithium-containing compound is easy to obtain, and can be conveniently applied to the composite material 1.

In some embodiments, a chemical formula of the transition metal oxide is M_{α}O_{β}, where 0<α≤3, 0<β≤5, and M includes at least one of Ni, Co, Fe, Mn, V, Cr, Cu, or Ti.

α may be 0.5, 1, 2, 3, or any value within the foregoing range, and β may be 0.5, 1, 2, 3, 4, 5, or any value within the foregoing range. In some examples, α and β are positive integers.

The foregoing catalyst 12 can lower a decomposition voltage of the lithium-containing compound 11, so that the lithium-containing compound 11 decomposes at a lower voltage.

In some embodiments, M_{α}O_{β} includes at least one of NiO, Co₃O₄, Fe₂O₃, MoO₃, or V₂O₅. The foregoing catalyst is easy to obtain, and can be conveniently applied to the composite material 1.

In some embodiments, the transition metal carbide includes at least one of molybdenum carbide, vanadium carbide, tungsten carbide, titanium carbide, cobalt carbide, iron carbide, or nickel carbide; and/or the transition metal nitride includes at least one of molybdenum nitride, vanadium nitride, titanium nitride, manganese nitride, cobalt nitride, iron nitride, or nickel nitride. The foregoing transition metal carbide and transition metal nitride have a good catalytic effect, and can catalyze decomposition of the lithium-containing compound.

In some embodiments, based on a total mass of the composite material 1, a mass content A of the carbon material 13 satisfies: 1wt%≤A≤40wt%; and

A may be 1wt%, 10wt%, 15wt%, 25wt%, 30wt%, 35wt%, 40wt%, or any value within the foregoing range.

When the mass content A of the carbon material 13 is not less than 1wt%, the carbon material 13 may completely wrap the catalyst 12 and the lithium-containing compound 11, and the composite material 1 has high conductivity, which is conducive to improving the capacity of the cell. When the mass content A of the carbon material 13 does not exceed 40wt%, the carbon material 13 has a proper mass ratio, and the catalyst 12 and the lithium-containing compound 11 also have proper mass ratios, which is conducive to improving the capacity of the cell.

In this embodiment, by setting A to satisfy 1wt%≤A≤40wt %, the cell has a higher capacity.

In some embodiments, A satisfies: 2wt%≤A≤25wt%. In this way, the cell can have both higher conductivity and a higher capacity.

In some embodiments, based on a total mass of the composite material 1, a mass content B of the catalyst 12 satisfies: 0.1wt%≤B≤20wt%.

B may be 0.1wt%, 0.5wt%, 1wt%, 5wt%, 8wt%, 10wt%, 15wt%, 20wt%, or any value within the foregoing range.

When the mass content B of the catalyst 12 is not less than 0.1wt%, a contact area between the catalyst 12 and the lithium-containing compound 11 is proper, and the catalyst 12 has a good catalytic effect, which is conducive to catalyzing decomposition of the lithium-containing compound 11 and improving the capacity of the cell. When the mass content B of the catalyst 12 does not exceed 20wt%, it helps add a larger quantity of the lithium-containing compound 11 to the composite material 1, which is conducive to improving the capacity of the cell.

In some embodiments, B satisfies: 0.5wt%≤B≤10wt%. In this way, it is conducive to taking both the capacity of the cell and the decomposition voltage of the lithium-containing compound 11 into account.

In some embodiments, based on a total mass of the composite material 1, a mass content C of the lithium-containing compound 11 satisfies: 45wt%≤B≤98.9wt%; and optionally, C satisfies: 70wt%≤B≤85wt%.

When the mass content C of the lithium-containing compound 11 is not less than 45wt%, because a content of the lithium-containing compound 11 is large, a large quantity of lithium ions can be produced through decomposition, so that more lithium ions can be supplemented to the negative electrode, which is conducive to improving the capacity of the cell. When the mass content C of the lithium-containing compound 11 does not exceed 98.9wt%, the carbon material 13 and the catalyst 12 in the composite material have specific mass contents, which is conducive to taking all of the decomposition voltage of the lithium-containing compound 11, the conductivity of the composite material 1, and a quantity of lithium ions decomposed from the lithium-containing compound 11 into account, thereby obtaining a higher battery capacity.

In some embodiments, an aspect ratio E of the carbon material 13 satisfies: 100:1≤E≤3000:1.

E may be 100:1, 200:1, 500:1, 1000:1, 1500:1, 2000:1, 3000:1, or any value within the foregoing range.

The aspect ratio is common knowledge in the art, has a meaning known in the art, and can be measured by testing methods and instruments known in the art. The aspect ratio may refer to a ratio of a length of the carbon material 13 to its diameter, and specifically, is a ratio of the length of the tubular structure of the carbon material 13 to its outer diameter.

When the aspect ratio E of the carbon material 13 is not less than 100:1, the composite material 1 has a good conductive effect. When the aspect ratio E of the carbon material 13 does not exceed 3000:1, which not only is conducive to synthesis of the carbon material 13, but also can reduce a risk of agglomeration of the carbon material 13, thereby reducing a risk of a small increase in the capacity of the cell due to agglomeration of the carbon material 13.

In some embodiments, E satisfies: 200:1≤E≤2000:1. In this way, the cell has a higher capacity.

In some embodiments, in the composite material 1, a decomposition voltage V1 of the lithium-containing compound 11 satisfies: V1<4.8 V; and optionally, V1 satisfies: V1<4.4 V. For example, V1 is 4.79 V, 4.4 V, 4.3 V, or the like.

The decomposition voltage of the lithium-containing compound 11 is common knowledge in the art, has a meaning known in the art, and can be measured by testing methods and instruments known in the art.

The lithium-containing compound 11 can decompose at a lower voltage to supplement the negative electrode with lithium, which can reduce a risk of a structural change in the positive electrode active material caused by a high voltage, and is conducive to improving stability and cycle performance of the cell.

In a possible implementation, a resistivity P of the composite material 1 satisfies: 0.2 Ω·cm<P<5.5 Ω·cm. For example, P is 0.23 Ω·cm, 1 Ω·cm, 5.49 Ω·cm, or any value within the foregoing range.

The resistivity is common knowledge in the art, has a meaning known in the art, and can be measured by testing methods and instruments known in the art.

The resistivity in this embodiment of this application is a measured resistivity of the composite material after the composite material is pressed into a sheet by means of a pressure of 20 Mpa. Generally, a larger pressure indicates a lower resistivity.

In this way, the composite material 1 has a proper resistivity, so that the positive electrode plate has proper conductive performance, and the cell has a proper capacity.

In some embodiments, an average volume particle size Dv¹50 of the lithium-containing compound 11 is greater than an average volume particle size Dv²50 of the catalyst 12. In this way, it helps the catalyst 12 to attach to the surface of the lithium-containing compound 11, thereby helping improve the catalytic effect of the catalyst 12.

The average volume particle size is common knowledge in the art, has a meaning known in the art, and can be measured by testing methods and instruments known in the art.

In some embodiments, a difference between an average volume particle size Dv¹50 of the lithium-containing compound 11 and an average volume particle size Dv²50 of the catalyst 12 ranges from 50 nm to 1000 nm. For example, Dv¹50 is 100 nm, and Dv²50 is 50 nm; Dv¹50 is 500 nm, and Dv²50 is 200 nm; or Dv¹50 is 1000 nm, and Dv²50 is 500 nm. A difference between Dv¹50 and Dv²50 is 50 nm, 100 nm, 500 nm, 1000 nm, or any value within the foregoing range. In this way, it helps the catalyst 12 to attach to the surface of the lithium-containing compound 11, thereby facilitating decomposition of the lithium-containing compound 11.

In some embodiments, the average volume particle size Dv¹50 of the lithium-containing compound 11 satisfies: 100 nm≤Dv¹50≤1000 nm, and the average volume particle size Dv²50 of the catalyst 12 satisfies: 50 nm≤Dv²50≤500 nm.

In this way, this is conducive to increasing specific surface areas of the lithium-containing compound 11 and the catalyst 12, and increasing the contact area between the lithium-containing compound 11 and the catalyst 12, thereby helping improve the effect of the catalyst 12 on catalyzed decomposition of the lithium-containing compound 11. In addition, since a catalytic effect of the catalyst 12 is improved, a requirement for the mass ratio of the catalyst 12 in the composite material 1 is lowered. When a mass content of the catalyst 12 is small, the decomposition voltage of the lithium-containing compound 11 can be reduced. In addition, it is also conducive to increasing mass contents of the lithium-containing compound 11 and the carbon material 13 in the composite material 1, to improve an energy density of the cell.

Content of a product side of the composite material according to this embodiment of this application is described above with reference to FIG. 1, and content of a preparation method side of the composite material is described below with reference to FIG. 2. For similar content, reference may be made to the description of the product side of the composite material, and details are not described herein again.

### [Preparation method for a composite material]

FIG. 2 is a schematic diagram of a preparation method for a composite material according to an embodiment of this application. The method can be used for preparing the composite material in any one of the foregoing embodiments. With reference to FIG. 2, the method 200 includes the following steps.

Step 210: Mix a lithium-containing compound 11 and a catalyst 12 to obtain a mixed material of the lithium-containing compound 11 and the catalyst 12. The catalyst 12 includes at least one of a transition metal oxide, a transition metal carbide, or a transition metal nitride. The lithium-containing compound 11 includes lithium, carbon, and oxygen.

Step 220: Add the mixed material of the lithium-containing compound and the catalyst into a polymer material-containing slurry, to obtain an electrospinning stock solution.

For example, the polymer material is added to an organic solvent, and heated and stirred until the polymer material is dissolved, to obtain a polymer material-containing slurry. Then, a mixed material of the lithium-containing compound 11 and the catalyst 12 is added into the foregoing slurry, to obtain an electrospinning stock solution.

In an example, a polymer material is added to an N,N-dimethylformamide (DMF) solution, and heated and continuously stirred for a period of time. A heating temperature during stirring is 80°C, a heating time is 10 h, and a stirring speed is 1000 rpm. After the polymer material is completely dissolved, the mixed material of the lithium-containing compound 11 and the catalyst 12 prepared in step 210 is added to a DMF solution in which the polymer material is dissolved, and the mixture is thoroughly mixed to form the electrospinning stock solution.

Step 230: Perform electrospinning on the electrospinning stock solution, to obtain a precursor.

In an example, a precursor of the composite material is obtained by coaxial electrospinning.

During electrospinning, the polymer in the electrospinning stock solution spontaneously wraps the lithium-containing compound 11 and the catalyst 12, to form a precursor completely wrapping the lithium-containing compound 11 and the catalyst 12. After calcination, the polymer in the precursor is carbonized, and the DMF solution disappears, to form the composite material 1 having a hollow tubular structure. In the composite material 1, there may be specific gaps between the lithium-containing compound 11 and the catalyst 12 and the inner wall of the tubular structure of the carbon material 13.

Step 240: Perform calcination of the precursor in an inert atmosphere to obtain the composite material 1.

The precursor is calcined in an inert atmosphere, and the polymer material can be removed through a carbonization process, to form the carbon material 13 having an internal hollow tubular structure. In addition, the lithium-containing compound 11 and the catalyst 12 are arranged in an inner wall of the tubular structure of the carbon material 13.

Through the foregoing method 200, the composite material 1 according to this embodiment of this application can be prepared, and the composite material 1 helps improve the capacity of the cell.

In some embodiments, a chemical formula of the lithium-containing compound 11 is Li₂CₓO_{y}, where 1≤x≤4, and 3≤y≤6. Optionally, the lithium-containing compound 11 includes at least one of Li₂C₂O₄, Li₂CO₃, Li₂C₄O₄, Li₂C₃O₅, or Li₂C₄O₆.

In some embodiments, a chemical formula of the transition metal oxide is M_{α}O_{β}, where 0<α≤3, 0<β≤5, and M includes at least one of Ni, Co, Fe, Mn, V, Cr, Cu, or Ti. Optionally, M_{α}O_{β} includes at least one of NiO, Co₃O₄, Fe₂O₃, MoO₃, or V₂O₅.

In some embodiments, the transition metal carbide includes at least one of molybdenum carbide, vanadium carbide, tungsten carbide, titanium carbide, cobalt carbide, iron carbide, or nickel carbide; and/or the transition metal nitride includes at least one of molybdenum nitride, vanadium nitride, titanium nitride, manganese nitride, cobalt nitride, iron nitride, or nickel nitride.

In some embodiments, a solute in the polymer material-containing slurry includes a polymer material, and a solvent in the polymer material-containing slurry is an organic solvent; and optionally, the organic solvent includes N,N-dimethylformamide. The polymer material has good solubility in an organic solvent. After polymer powder is added to the organic solvent, the foregoing solution can be conveniently prepared. N,N-dimethylformamide has good stability, so the foregoing slurry has good performance.

In some embodiments, a mass ratio D of the polymer material to the N,N-dimethylformamide satisfies: 1:20≤D≤1:1.

D may be 1:20, 1:15, 1:10, 1:8, 1:5, 1:1, or any value within the foregoing range. When D is not less than 1:20, the polymer material and the N,N-dimethylformamide have a proper mass ratio, which facilitates the smooth progress of electrospinning and reduces difficulty of the electrospinning. When D does not exceed 1:1, a risk of a dilute electrospinning stock solution due to more N,N-dimethylformamide and less polymer material can be reduced, thereby reducing a risk of composite material breakage during subsequent calcination. By properly setting a value of D, smooth electrospinning and preparation of the composite material 1 are facilitated, which helps obtain a carbon material 13 with a proper mass ratio through a subsequent calcination process.

In some embodiments, D satisfies: 1:10≤D≤1:5.

In some embodiments, the polymer material includes at least one of polyvinyl pyrrolidone, polyacrylonitrile, or polyethylene oxide. In an example, the polymer is polyacrylonitrile.

In some embodiments, a temperature T of the calcination satisfies: 300°C≤T≤480°C.

T may be 300°C, 350°C, 400°C, 450°C, 480°C, or any value in the foregoing range.

By setting the temperature T of the calcination to satisfy 300°C≤T≤480°C, it not only is conducive to achieving sufficient carbonization of the polymer material, but also can reduce a risk of thermal decomposition of the lithium-containing compound due to an excessively high temperature, thereby facilitating preparation of the carbon material 13 with a hollow tubular structure.

In some embodiments, T satisfies: 350°C≤T≤450°C.

In some embodiments, step 210 includes: mixing the lithium-containing compound 11 and the catalyst 12 and performing high-energy ball milling, to obtain the mixed material including the lithium-containing compound 11 and the catalyst 12.

High-energy ball milling refers to a method of using rotation or vibration of ball mills to make hard balls strongly impact, grind, and stir raw materials, and crush the powder into nano-sized particles through the shear force between the ball mills.

In an example, the lithium-containing compound 11 and the catalyst 12 may be ball-milled by using a high-energy ball mill.

Through high-energy ball milling, a lithium-containing compound 11 with a smaller particle size and a catalyst 12 with a smaller particle size can be obtained, which is conducive to making mixing of the lithium-containing compound 11 and the catalyst 12 more evenly, and is conducive to increasing specific surface areas and activity of the lithium-containing compound 11 and the catalyst 12, thereby helping improve the catalytic effect of the catalyst 12.

In some embodiments, a ball-to-material ratio F of the high-energy ball milling satisfies: 10:1≤F≤15:1; and/or a revolution speed R1 of the high-energy ball milling satisfies: 1000 r/min≤R1≤1500 r/min; and/or a rotation speed R2 of the high-energy ball milling satisfies: 2500 r/min≤R2≤ 3000 r/min. In this way, the high-energy ball milling has proper process parameters, which helps obtain a lithium-containing compound 11 with a proper particle size and a catalyst 12 with a proper particle size.

The ball-to-material ratio refers to a mass ratio of ball mills to the material in a ball mill pot, that is, a ratio of a mass sum of the ball mills to a mass sum of the lithium-containing compound 11 and the catalyst 12. The revolution speed may refer to a rotation speed of a main wheel of the ball mill. The rotation speed may refer to a rotation speed of the ball mill pot.

F may be 10:1, 12:1, 15:1, or any value within the foregoing range, R1 may be 1000 r/min, 1200 r/min, 1500 r/min, or any value within the foregoing range, and R2 may be 2500 r/min, 2800 r/min, or 3000 r/min, or any value within the foregoing range.

In some embodiments, a mass ratio K of the lithium-containing compound 11 to the catalyst 12 satisfies: 15:1≤K≤40:1. In this way, the lithium-containing compound 11 and the catalyst 12 have a proper mass ratio, and the lithium-containing compound 11 can decompose more fully under the action of the catalyst 12, which is conducive to improving the capacity of the cell.

K may be 15:1, 20:1, 30:1, 40:1, or any value within the foregoing range.

In some embodiments, an average volume particle size Dv¹50 of the lithium-containing compound 11 is greater than an average volume particle size Dv²50 of the catalyst 12. Optionally, a difference between an average volume particle size Dv¹50 of the lithium-containing compound 11 and an average volume particle size Dv²50 of the catalyst 12 ranges from 50 nm to 1000 nm.

In some embodiments, the average volume particle size Dv¹50 of the lithium-containing compound 11 satisfies: 100 nm≤Dv¹50≤1000 nm, and the average volume particle size Dv²50 of the catalyst 12 satisfies: 50 nm≤Dv²50≤500 nm.

In some embodiments, in the electrospinning, a voltage is 15 kV, a propulsion speed of the electrospinning stock solution is 0.2 mL/min, a receiving distance is 15 cm, and a spinning time is 12 h. In this way, the composite material 1 is conveniently prepared through proper preparation process parameters.

It should be noted that in this embodiment of this application, other parameters, such as a voltage, a propulsion speed, a receiving distance, and a spinning time, may also be set according to actual needs, and this embodiment of this application includes, but is not limited to, this.

### [Positive electrode plate]

An embodiment of this application provides a positive electrode plate, including a positive electrode active material; and the composite material 1 according to any one of the foregoing embodiments, and/or the composite material 1 prepared by using the method according to any one of the foregoing embodiments.

The positive electrode plate includes a positive electrode current collector and a positive electrode film layer arranged on the positive electrode current collector.

The positive electrode current collector may be a metal foil or a composite current collector. For example, the positive electrode current collector may be an aluminum foil.

The composite current collector may include a polymer material substrate layer and a metal layer formed on at least one surface of the polymer material substrate layer. The composite current collector may be formed by forming a metal material (for example, aluminum, an aluminum alloy, nickel, a nickel alloy, titanium, a titanium alloy, silver, or a silver alloy) on a polymer material substrate (for example, a substrate of polypropylene (PP), polyethylene terephthalate (PET), polybutylene terephthalate (PBT), polystyrene (PS), or polyethylene (PE)).

The positive electrode film layer includes a positive electrode active material. The positive electrode active material may be a positive electrode active material for a battery known in the art. For example, the positive electrode active material is lithium iron phosphate, a ternary material, a lithium-rich manganese-based material, or the like.

The positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

The positive electrode film layer further optionally includes a conductive agent. The conductive agent can include at least one of superconducting carbon, acetylene black, carbon black, Ketjen Black, carbon dots, carbon nanotubes, graphene, and carbon nanofibers.

In some embodiments, a resistance R of the positive electrode plate satisfies: 0.3 Q<R<0.5 Q. In this way, the positive electrode plate has proper conductivity, and the cell has a proper capacity.

### [Negative electrode plate]

The negative electrode plate includes a negative electrode current collector and a negative electrode film layer disposed on the negative electrode current collector.

The negative electrode current collector may be a metal foil or a composite current collector. The negative electrode current collector may be a copper foil. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

The negative electrode film layer includes a negative electrode active material. The negative electrode active material may be a negative electrode active material for a battery known in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon oxide, silicon-carbon composite, silicon-nitrogen composite, and silicon alloy. The tin-based material may be selected from at least one of elemental tin, tin oxide, and tin alloy. However, this application is not limited to these materials, and other conventional materials that can be used as the negative electrode active material of the battery may also be used. These negative electrode active materials may be used individually or in combination of more than two thereof.

The negative film layer optionally includes a conductive agent. The conductive agent can include at least one of superconducting carbon, acetylene black, carbon black, Ketjen Black, carbon dots, carbon nanotubes, graphene, and carbon nanofibers.

### [Electrolyte]

The electrolyte serves to conduct ions between the positive electrode plate and the negative electrode plate. The type of the electrolyte is not specifically limited in this embodiment of this application, and may be selected as required. For example, the electrolyte may be in a liquid, gel, or fully-solid state.

In some embodiments, an electrolytic solution is used as the electrolyte. The electrolytic solution includes an electrolytic salt and a solvent.

The electrolyte salt may include at least one of lithium hexafluorophosphate, lithium tetrafluoroborate, lithium perchlorate, lithium hexafluorasoate, lithium bis(fluorosulfonyl)imide, lithium bis(trifluoromethanesulfonyl)imide, lithium trifluoromethanesulfonate, lithium difluorophosphate, lithium difluororo(oxalate)borate, lithium bis(oxalate)borate, lithium bis(oxyalyl)difluorophosphate, and lithium tetrafluoro(oxalato)phosphate.

The solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane dimethyl sulfone, ethyl methyl sulfone, and diethyl sulfone.

The electrolyte may further optionally include a negative electrode film-forming additive and a positive electrode film-forming additive, and may further include an additive capable of improving some performance of the battery, for example, a performance additive capable of improving overcharge performance of the battery, and a performance additive capable of improving high-temperature or low-temperature performance of the battery.

### [Separator]

The separator is configured to separate the positive electrode plate and the negative electrode plate. The type of the separator is not specifically limited in this embodiment of this application, and may be any well-known porous separator that is highly chemically and mechanically stable.

A material of the separator may include at least one of glass fiber, non-woven fabric, polyethylene, polypropylene, and polyvinylidene fluoride. The separator may be a single-layer film or a multi-layer composite film, which is not particularly limited herein. When the separator is the multi-layer composite thin film, the materials of the layers may be the same or different, which is not particularly limited.

The positive electrode plate, the negative electrode plate, and the separator can be made into an electrode assembly by a winding process or a lamination process.

### [Cell]

An embodiment of this application provides a cell, including the positive electrode plate in the foregoing embodiment.

The cell in this embodiment of this application may be a cell that is not charged or discharged. For example, the cell is a cell that has just been assembled and has not been used. For example, the cell is a cell on which a formation process has not been performed.

After the cell is assembled and used for a period of time, in the electrode plate in the cell, the lithium-containing compound 11 in the composite material 1 decomposes, and only a small amount of or no lithium-containing compound 11 is present in the electrode plate.

The shape of the cell is not particularly limited in this embodiment of this application, and may be cylindrical, prismatic or any other shape. The cell may be a lithium-ion battery, a lithium-sulfur battery, a sodium-ion battery, a magnesium-ion battery, or the like.

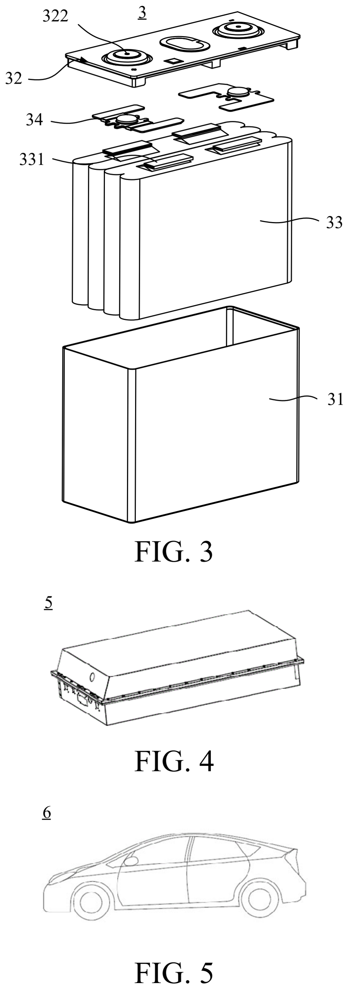

FIG. 3 is a schematic diagram of a cell according to an embodiment of this application. For example, as shown in FIG. 3, the cell 3 is a square cell. The cell 3 includes a case 31, an end lid assembly 32, and an electrode assembly 33 arranged in the case 31.

The electrode assembly 33 may be prepared from a positive electrode plate, a negative electrode plate, and a separator by a winding process or a lamination process.

The end lid assembly 32 includes an electrode terminal 322. For example, as shown in FIG. 3, the end lid assembly 32 includes two electrode terminals 322, where one is a positive electrode terminal, and the other is a negative electrode terminal.

The cell 3 further includes a current collecting member 34. The current collecting member 34 is configured to connect a tab 331 of the electrode assembly 33 and the electrode terminal 322. For example, when an electrode plate 1 of this embodiment of this application is a positive electrode plate, one current collecting component 34 is configured to connect a positive electrode tab (which may also be the electrode tab 102 of the electrode plate 1) and a positive electrode terminal, and another current collecting component 34 is configured to connect a negative electrode tab and a negative electrode terminal.

In some embodiments, the cell can be assembled into a battery module, one or more cells may be included in the battery module, and a specific quantity can be selected by a person skilled in the art according to the application and capacity of the battery module.

### [Battery]

An embodiment of this application provides a battery, including the cell in the foregoing embodiment. FIG. 4 is a schematic diagram of a battery according to an embodiment of this application. As shown in FIG. 4, the battery 5 may include a plurality of cells (not shown in the figure).

The cell 3 may directly form the battery 5, or may form a battery module first, and then, a plurality of battery module form the battery 5.

### [Electric device]

An embodiment of this application provides an electric device, including the battery according to the foregoing embodiment.

FIG. 5 is a schematic diagram of an electric device according to an embodiment of this application. As shown in FIG. 5, this application provides an electric device 6, including the battery in the foregoing embodiment.

Optionally, the electric device may also be an energy storage device, a lighting device, a spacecraft, or the like. This embodiment of this application includes, but is not limited to, this.

The examples of this application are described below. The examples described below are illustrative, are merely used to explain this application, and should not be construed as a limitation to this application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### [Examples]

### Example 1

In a process of preparing a composite material, a mass ratio K of a lithium-containing compound to a catalyst was 17: 1, an average volume particle size Dv¹50 of the lithium-containing compound was 500 nm, and an average volume particle size Dv²50 of the catalyst was 200 nm. A polymer material was polyacrylonitrile, a mass ratio of the polymer material to DMF was 1:10, and a calcination temperature T was 400°C.

In the prepared composite material, a mass content A of a carbon material was 10wt%, a mass content B of the catalyst was 5wt%, and a mass content C of the lithium-containing compound was 85wt%. An aspect ratio E of the carbon material was 1500:1, a decomposition voltage V1 of the lithium-containing compound was 4.35 V, and a resistivity P of a powder of the composite material was 0.21 Ω·cm.

### Examples 2 to 5

Examples 2 to 5 differed from Example 1 in that: The mass content A of the carbon material was different.

The mass content of the carbon material was related to an amount of the polymer material added in the preparation process. A larger amount of the polymer material added indicated a larger mass content A of the carbon material. The mass content of the added polymer material may be calculated according to the mass content of the carbon material.

### Examples 6 to 9

Examples 6 to 9 differed from Example 1 in that: The mass content B of the catalyst was different.

### Examples 10 to 13

Examples 10 to 13 differed from Example 1 in that: The aspect ratio E of the carbon material was different.

### Examples 14 to 17

Examples 14 to 17 differed from Example 1 in that: The mass ratio of polymer material to DMF was different.

### Examples 18 to 21

Examples 18 to 21 differed from Example 1 in that: The calcination temperature T was different.

### Examples 22 to 24

Examples 22 to 24 differed from Example 1 in that: The average volume particle size Dv¹50 of the lithium-containing compound and the average volume particle size Dv²50 of the catalyst were different.

### Examples 25 to 27

Examples 25 to 27 differed from Example 1 in that: The type of the lithium-containing compound was different.

### Examples 28 to 29

Examples 28 to 29 differed from Example 1 in that: The type of the catalyst was different.

### Example 30

Example 30 differed from Example 1 in that: The mass ratios of the carbon material and the catalyst were lower, and the aspect ratio of the carbon material was lower.

### Example 31

Example 31 differed from Example 1 in that: The mass ratio of the carbon material was higher, and the mass ratio of the polymer material to DMF was higher.

### Example 32

Example 32 differed from Example 1 in that: The mass ratio of the catalyst was higher, and the calcination temperature was higher.

### Example 33

Example 33 differed from Example 1 in that: The aspect ratio of the carbon material was higher, the mass ratio of the polymer to DMF was lower, and the calcination temperature was lower.

### Examples 34 and 35

Examples 34 and 35 differed from Example 1 in that: The catalyst was a transition metal carbide and a transition metal nitride respectively.

### Example 36

Example 36 differed from Example 1 in that: During preparation of the positive electrode plate, lithium iron phosphate (LFP) was added as the positive electrode active material.

### Comparative example 1

Comparative example 1 differed from Example 1 in that: The material of Comparative example 1 was not a composite material and was only a lithium-containing compound.

### Comparative example 2

Comparative example 2 differed from Example 1 in that: The material of Comparative example 2 was a material obtained after mixing a lithium-containing compound and a catalyst.

### Comparative example 3

Comparative example 3 differed from Example 1 in that: The material of Comparative example 3 was a carbon-coated lithium-containing compound.

### Comparative example 4

Comparative example 4 differed from Example 25 in that: The material of Comparative example 4 was not a composite material and was only a lithium-containing compound.

### Comparative example 5

Comparative example 5 differed from Example 26 in that: The material of Comparative example 5 was not a composite material and was only a lithium-containing compound.

### Comparative example 6

Comparative example 6 differed from Example 27 in that: The material of Comparative example 6 was not a composite material and was only a lithium-containing compound.

### Comparative example 7

Comparative example 7 differed from Example 36 in that: The added material of Comparative example 7 was not a composite material and was only a lithium-containing compound.

### Comparative example 8

Comparative example 8 differed from Example 36 in that: The added material of Comparative example 8 was a material obtained after mixing a lithium-containing compound and a catalyst.

### Comparative example 9

Comparative example 9 differed from Example 36 in that: The added material of Comparative example 9 was a carbon-coated lithium-containing compound.

With reference to Table 1 and Table 2, in Examples 1 to 34 and Comparative examples 1 to 6, a lithium ion cell is prepared by using a composite material as a positive electrode active material.

In Table 1 and Table 3, A is a mass content of a carbon material, B is a mass content of a catalyst, C is a mass content of a lithium-containing compound, and K is a mass ratio of the lithium-containing compound to the catalyst, Dᵥ¹50 is an average volume particle size of the lithium-containing compound, Dᵥ²50 is an average volume particle size of the catalyst, E is a mass ratio of the carbon material, D is a mass ratio of a polymer material to DMF, and T is a calcination temperature. In Table 2 and Table 3, V1 is a decomposition voltage of the lithium-containing compound, P is a powder resistivity of the composite material, Q is a first-circle charge capacity of a cell, and R is a film resistance of an electrode plate after the electrode plate is fully charged.

**Table 1 Parameters of examples and comparative examples**

| No. | Composite material | A /wt% | B /wt% | C /wt% | K | Dᵥ¹50 /nm | Dᵥ²50 /nm | E | D | T (°C) |
|---|---|---|---|---|---|---|---|---|---|---|
| Example 1 | Li₂C₂O₄/NiO@C | 10 | 5 | 85 | 17.0 | 500 | 200 | 1500:1 | 1:10 | 400 |
| Example 2 | Li₂C₂O₄/NiO@C | 1 | 5 | 94 | 18.8 | 500 | 200 | 1500:1 | 1:10 | 400 |
| Example 3 | Li₂C₂O₄/NiO@C | 2 | 5 | 93 | 18.6 | 500 | 200 | 1500:1 | 1:10 | 400 |
| Example 4 | Li₂C₂O₄/NiO@C | 25 | 5 | 70 | 14.0 | 500 | 200 | 1500:1 | 1:10 | 400 |
| Example 5 | Li₂C₂O₄/NiO@C | 40 | 5 | 55 | 11.0 | 500 | 200 | 1500:1 | 1:10 | 400 |
| Example 6 | Li₂C₂O₄/NiO@C | 10 | 0.1 | 89.9 | 899.0 | 500 | 200 | 1500:1 | 1:10 | 400 |
| Example 7 | Li₂C₂O₄/NiO@C | 10 | 0.5 | 89.5 | 179.0 | 500 | 200 | 1500:1 | 1:10 | 400 |
| Example 8 | Li₂C₂O₄/NiO@C | 10 | 10 | 80 | 8.0 | 500 | 200 | 1500:1 | 1:10 | 400 |
| Example 9 | Li₂C₂O₄/NiO@C | 10 | 20 | 70 | 3.5 | 500 | 200 | 1500:1 | 1:10 | 400 |
| Example 10 | Li₂C₂O₄/NiO@C | 10 | 5 | 85 | 17.0 | 500 | 200 | 100:1 | 1:10 | 400 |
| Example 11 | Li₂C₂O₄/NiO@C | 10 | 5 | 85 | 17.0 | 500 | 200 | 200:1 | 1:10 | 400 |
| Example 12 | Li₂C₂O₄/NiO@C | 10 | 5 | 85 | 17.0 | 500 | 200 | 2000:1 | 1:10 | 400 |
| Example 13 | Li₂C₂O₄/NiO@C | 10 | 5 | 85 | 17.0 | 500 | 200 | 3000:1 | 1:10 | 400 |
| Example 14 | Li₂C₂O₄/NiO@C | 10 | 5 | 85 | 17.0 | 500 | 200 | 1500:1 | 1:1 | 400 |
| Example 15 | Li₂C₂O₄/NiO@C | 10 | 5 | 85 | 17.0 | 500 | 200 | 1500:1 | 1:2 | 400 |
| Example 16 | Li₂C₂O₄/NiO@C | 10 | 5 | 85 | 17.0 | 500 | 200 | 1500:1 | 1:15 | 400 |
| Example 17 | Li₂C₂O₄/NiO@C | 10 | 5 | 85 | 17.0 | 500 | 200 | 1500:1 | 1:20 | 400 |
| Example 18 | Li₂C₂O₄/NiO@C | 10 | 5 | 85 | 17.0 | 500 | 200 | 1500:1 | 1:10 | 300 |
| Example 19 | Li₂C₂O₄/NiO@C | 10 | 5 | 85 | 17.0 | 500 | 200 | 1500:1 | 1:10 | 350 |
| Example 20 | Li₂C₂O₄/NiO@C | 10 | 5 | 85 | 17.0 | 500 | 200 | 1500:1 | 1:10 | 450 |
| Example 21 | Li₂C₂O₄/NiO@C | 10 | 5 | 85 | 17.0 | 500 | 200 | 1500:1 | 1:10 | 480 |
| Example 22 | Li₂C₂O₄/NiO@C | 10 | 5 | 85 | 17.0 | 1000 | 500 | 1500:1 | 1:10 | 400 |
| Example 23 | Li₂C₂O₄/NiO@C | 10 | 5 | 85 | 17.0 | 100 | 50 | 1500:1 | 1:10 | 400 |
| Example 24 | Li₂C₂O₄/NiO@C | 10 | 5 | 85 | 17.0 | 2000 | 1000 | 1500:1 | 1:10 | 400 |
| Example 25 | Li₂C₄O₄/NiO@C | 10 | 5 | 85 | 17.0 | 500 | 200 | 1500:1 | 1:10 | 400 |
| Example 26 | Li₂CO₃/NiO@C | 10 | 5 | 85 | 17.0 | 500 | 200 | 1500:1 | 1:10 | 400 |
| Example 27 | Li₂C₄O₆/NiO@C | 10 | 5 | 85 | 17.0 | 500 | 200 | 1500:1 | 1:10 | 400 |
| Example 28 | Li₂C₂O₄/Co₃O₄@C | 10 | 5 | 85 | 17.0 | 500 | 200 | 1500:1 | 1:10 | 400 |
| Example 29 | Li₂C₂O₄/MoO₃@C | 10 | 5 | 85 | 17.0 | 500 | 200 | 1500:1 | 1:10 | 400 |
| Example 30 | Li₂C₂O₄/NiO@C | 0.2 | 0.02 | 99.78 | 4989.0 | 500 | 200 | 50:1 | 1:10 | 400 |
| Example 31 | Li₂C₂O₄/NiO@C | 50 | 5 | 45 | 9.0 | 500 | 200 | 1500:1 | 1:0.2 | 400 |
| Example 32 | Li₂C₂O₄/NiO@C | 10 | 30 | 60 | 2.0 | 500 | 200 | 1500:1 | 1:10 | 500 |
| Example 33 | Li₂C₂O₄/NiO@C | 10 | 5 | 85 | 17.0 | 500 | 200 | 5000:1 | 1:30 | 250 |
| Example 34 | Li₂C₂O₄/MO₂C@C | 10 | 5 | 85 | 17.0 | 500 | 200 | 1500:1 | 1:10 | 400 |
| Example 35 | Li₂C₂O₄/MoN@C | 10 | 5 | 85 | 17.0 | 500 | 200 | 1500:1 | 1:10 | 400 |
| Comparative example 1 | Li₂C₂O₄ | / | / | 100 | / | 500 | / | / | / | / |
| Comparative example 2 | Li₂C₂O₄/NiO | / | 5 | 95 | 19.0 | 500 | 200 | / | / | / |
| Comparative example 3 | Li₂C₂O₄@C | 10 | / | 90 | / | 500 | / | 1500:1 | 1:10 | 400 |
| Comparative example 4 | Li₂C₄O₄ | / | / | 100 | / | 500 | / | / | / | / |
| Comparative example 5 | Li₂CO₃ | / | / | 100 | / | 500 | / | / | / | / |
| Comparative example 6 | Li₂C₄O₆ | / | / | 100 | / | 500 | / | / | / | / |

**Table 2 Experimental results of comparative examples and examples**

| No. | Decomposition voltage V1 (V) | Powder resistivity P (Ω·cm) | First-circle charge capacity Q (mAh/g) | Film resistance R (Q) of an electrode plate after the electrode plate is fully charged |
|---|---|---|---|---|
| Example 1 | 4.35 | 0.21 | 520 | 0.323 |
| Example 2 | 4.38 | 100.45 | 331 | 0.494 |
| Example 3 | 4.37 | 50.38 | 355 | 0.471 |
| Example 4 | 4.36 | 0.24 | 441 | 0.325 |
| Example 5 | 4.36 | 0.22 | 362 | 0.324 |
| Example 6 | 4.63 | 0.55 | 437 | 0.345 |
| Example 7 | 4.52 | 0.34 | 482 | 0.331 |
| Example 8 | 4.36 | 0.25 | 466 | 0.326 |
| Example 9 | 4.35 | 0.23 | 444 | 0.324 |
| Example 10 | 4.39 | 0.36 | 466 | 0.334 |
| Example 11 | 4.36 | 0.29 | 491 | 0.328 |
| Example 12 | 4.37 | 0.31 | 488 | 0.330 |
| Example 13 | 4.38 | 0.37 | 459 | 0.335 |
| Example 14 | 4.48 | 2.36 | 361 | 0.386 |
| Example 15 | 4.42 | 1.98 | 383 | 0.384 |
| Example 16 | 4.41 | 1.87 | 392 | 0.380 |
| Example 17 | 4.46 | 2.32 | 365 | 0.388 |
| Example 18 | 4.37 | 5.32 | 387 | 0.401 |
| Example 19 | 4.36 | 0.98 | 432 | 0.376 |
| Example 20 | 4.35 | 0.35 | 474 | 0.333 |
| Example 21 | 4.38 | 4.23 | 391 | 0.396 |
| Example 22 | 4.41 | 0.22 | 474 | 0.354 |
| Example 23 | 4.39 | 0.21 | 481 | 0.340 |
| Example 24 | 4.52 | 0.23 | 431 | 0.361 |
| Example 25 | 4.28 | 0.2 | 421 | 0.321 |
| Example 26 | 4.46 | 0.51 | 682 | 0.347 |
| Example 27 | 4.41 | 0.38 | 315 | 0.336 |
| Example 28 | 4.36 | 0.21 | 518 | 0.320 |
| Example 29 | 4.37 | 0.22 | 517 | 0.322 |
| Example 30 | 4.52 | 2354.5 | 282 | 0.752 |
| Example 31 | 4.51 | 23.14 | 222 | 0.442 |
| Example 32 | 4.36 | 17.27 | 234 | 0.421 |
| Example 33 | 4.43 | 65.28 | 301 | 0.492 |
| Example 34 | 4.36 | 0.22 | 518 | 0.328 |
| Example 35 | 4.36 | 0.23 | 517 | 0.329 |
| Comparative example 1 | 4.88 | 105423.25 | 121 | 1.567 |
| Comparative example 2 | 4.81 | 9875.21 | 123 | 1.134 |
| Comparative example 3 | 4.87 | 0.26 | 145 | 0.325 |
| Comparative example 4 | 4.68 | 134790.76 | 107 | 1.762 |
| Comparative example 5 | 4.62 | 113459.44 | 112 | 1.611 |
| Comparative example 6 | 4.67 | 124921.23 | 109 | 1.674 |

### [Preparation of a cell]

(1) Preparation of a positive electrode plate: A composite material, a binder polyvinylidene fluoride (PVDF), and a conductive agent (acetylene black) were dissolved in a solvent N-methylpyrrolidone (NMP) at a mass ratio of 97:2:1, and the mixture was fully stirred and mixed to prepare a positive electrode slurry. The positive electrode slurry was uniformly coated onto an aluminum foil of a positive electrode current collector, followed by drying, cold pressing, and cutting to obtain a positive electrode plate. During preparation of the positive electrode plate, the composite material was used as an active material, and no other active material was added.
(2) Preparation of a negative electrode plate: A negative electrode active material artificial graphite, a conductive agent acetylene black, a binder styrene butadiene rubber (SBR), and a thickener sodium carboxymethyl cellulose (CMC-Na) were dissolved in a solvent deionized water at a mass ratio of 96:1.5:1.5:1.0, and the mixture was fully stirred and uniformly mixed to prepare a negative electrode slurry. The negative electrode slurry was uniformly coated onto a copper foil of a negative electrode current collector, followed by drying, cold pressing, and cutting to obtain a negative electrode plate.
(3) Separator: A polypropylene film was used.
(4) Preparation of an electrolytic solution: Ethylene carbonate (EC), ethyl methyl carbonate (EMC), and diethyl carbonate (DEC) were mixed at a volume ratio of 1:1:1, and then, LiPF₆ was uniformly dissolved in the foregoing solution, to obtain an electrolytic solution. In the electrolytic solution, a concentration of LiPF₆ was 1 mol/L.
(5) Production of a lithium-ion battery: The foregoing positive electrode plate, separator, and negative electrode plate were sequentially stacked and wound, to obtain an electrode assembly. The electrode assembly was put into an outer package, into which the prepared electrolytic solution was added followed by sealing, standing, formation, and aging, to obtain a lithium-ion battery.

With reference to Table 3, in Example 36 and Comparative examples 7 to 9, a lithium-ion cell is prepared by using a composite material as a lithium supplement and lithium iron phosphate as a positive electrode active material.

**Table 3 Experimental parameters and results of Example 36 and Comparative examples 7 to 9**

| No. | Active material | Composite material | A /wt % | B /wt % | C /wt % | K | Dᵥ¹5 0 /nm | Dᵥ²5 0 /nm | E | D | T/° C | P /Ω·cm | Q /mAh/g |
|---|---|---|---|---|---|---|---|---|---|---|---|---|---|
| Example 36 | LTP | Li₂C₂O₄/NiO@ C | 10 | 5 | 85 | 17. 0 | 500 | 200 | 1500: 1 | 1:1 0 | 400 | 0.21 | 168 |
| Comparativ e example 7 | LTP | Li₂C₂O₄ | / | / | 100 | / | 500 | / | / | / | / | 105423.2 5 | 160 |
| Comparativ e example 8 | LTP | Li₂C₂O₄/NiO | / | 5 | 95 | 19. 0 | 500 | 200 | / | / | / | 9875.21 | 162 |
| Comparativ e example 9 | LTP | Li₂C₂O₄@C | 10 | / | 90 | / | 500 | / | 1500: 1 | 1:1 0 | 400 | 0.26 | 163 |

### [Preparation of a cell]

(1) Preparation of a positive electrode plate: A composite material, a positive electrode active material lithium iron phosphate (LFP), a binder polyvinylidene fluoride (PVDF), and a conductive agent (acetylene black) were dissolved in a solvent N-methylpyrrolidone (NMP) at a mass ratio of 95:2:2:1, and the mixture was fully stirred and mixed to prepare a positive electrode slurry. The positive electrode slurry was uniformly coated onto an aluminum foil of a positive electrode current collector, followed by drying, cold pressing, and cutting to obtain a positive electrode plate. During preparation of the positive electrode plate, the composite material was used as a lithium supplement.
(2) Preparation of a negative electrode plate: A negative electrode active material artificial graphite, a conductive agent acetylene black, a binder styrene butadiene rubber (SBR), and a thickener sodium carboxymethyl cellulose (CMC-Na) were dissolved in a solvent deionized water at a mass ratio of 96:1.5:1.5:1.0, and the mixture was fully stirred and uniformly mixed to prepare a negative electrode slurry. The negative electrode slurry was uniformly coated onto a copper foil of a negative electrode current collector, followed by drying, cold pressing, and cutting to obtain a negative electrode plate.
(3) Separator: A polypropylene film was used.
(4) Preparation of an electrolytic solution: Ethylene carbonate (EC), ethyl methyl carbonate (EMC), and diethyl carbonate (DEC) were mixed at a volume ratio of 1:1:1, and then, LiPF₆ was uniformly dissolved in the foregoing solution, to obtain an electrolytic solution. In the electrolytic solution, a concentration of LiPF₆ was 1 mol/L.
(5) Production of a lithium-ion battery: The foregoing positive electrode plate, separator, and negative electrode plate were sequentially stacked and wound, to obtain an electrode assembly. The electrode assembly was put into an outer package, in which the prepared electrolytic solution was added followed by sealing, standing, formation, and aging, to obtain a lithium-ion battery.

### [Test on a first-circle charge capacity of a lithium-ion battery]

The assembled lithium-ion battery was charged to 4.25 V at a rate of 0.1 C at a constant current, and was allowed to stand for 5 min, and a first-circle charge capacity of the lithium-ion battery at this moment was recorded. The first-circle charge capacity of the lithium-ion battery was obtained by dividing the first-circle charge capacity of the battery by a mass of the composite material.

### [Test on average volume particle sizes of a catalyst and a lithium-containing compound]

The average volume particle size was determined by using a particle size analyzer-laser diffraction method, and specifically, was measured with reference to the standard GB/T19077-2016, by using a laser diffraction particle size analyzer according to the specification of the manufacturer. For example, before the composite material was prepared, an appropriate amount of the catalyst and an appropriate amount of the lithium-containing compound were separately taken, and average volume particle sizes of the materials were tested by using a Malvern 2000 (MasterSizer 2000) laser particle sizer. For example, an appropriate amount of a to-be-tested sample (provided that a concentration of the sample was sufficient to ensure a shading rate of 8% to 12%) was taken and added to 20 mL of deionized water, and externally sonicated for 5 min (53 KHz/120 W) to ensure that the sample was completely dispersed. Then the sample was tested according to the standard GB/T19077-2016/ISO 13320: 2009.

### [Test on a powder resistivity of a composite material]

A powder of the composite material was dried, an appropriate amount of the powder was weighted, then a powder resistivity tester (ST2722 digital four-probe instrument, manufactured by Suzhou Lattice Electronics Co., Ltd.) was used to determine the powder resistivity of the sample according to GB/T 30835-2014, and a test pressure was 20 Mpa.

### [Test on an aspect ratio]

An aspect ratio of the carbon material was the same as an aspect ratio of the composite material, and may be measured by a transmission electron microscope. Normally, 20 strands of well-dispersed composite material were taken, their outer diameters and lengths were respectively tested, and then an average value was taken as the aspect ratio of the carbon material.

### [Test on a decomposition voltage]

A decomposition voltage of the lithium-containing compound was an average charge voltage in a first charge process, that is, a ratio of charge energy/a charge capacity.

### [Test on a resistance of an electrode plate]

A positive electrode plate was disassembled after the positive electrode plate was fully charged, and discs with an area of 1540 mm² were cut from the selected left, middle, and right positions of the electrode plate. An indicator on an electrode plate resistance tester (for example, an electrode plate resistance tester from Initial Energy Science & Technology Co., Ltd) was powered on, the disc was placed at an appropriate position on the "probe" of the electrode plate resistance tester, and the "Start" button was clicked. The reading was recorded after it was stable. Each small disc was tested at two positions, and finally, the average of six measurements was calculated and used as a film resistance of the electrode plate.

### [Tests on a mass content of a carbon material, a mass content of a catalyst, and a mass content of a lithium-containing compound in a composite material]

Components of the composite material and mass contents of the components may be measured in the following manners.

In an example, a proper amount of composite material powder is taken and observed using a scanning electron microscope, and a carbon material having a tubular structure can be observed. Secondly, the elemental composition of the composite material can be determined by using an energy dispersive spectroscope, and then a material and mass contents of the components are determined by using a thermogravimetric analysis method.

In an example, a proper amount of composite material powder is taken and the powder is dissolved in deionized water (or a corresponding soluble solvent). Because the lithium-containing compound can be dissolved in water, the lithium-containing compound can be separated from the composite material, a weight of the lithium-containing compound is measured, and further, a mass content of the lithium-containing compound is calculated. Then, the undissolved matter in the powder is added to another solvent that can dissolve the catalyst, a weight of the catalyst is measured, and a mass content of the catalyst is calculated. Finally, the matter including only a carbon material can be obtained, and a mass content of the carbon material can be obtained by weighing.

It should be noted that, the first-circle charge capacity, the average volume particle size, the resistivity, the aspect ratio, the decomposition voltage, the resistance, the mass content of the carbon material in the composite material, the mass content of the catalyst in the composite material, and the mass content of the lithium-containing compound in the composite material in the examples of this application are common knowledge in the art, have meanings known in the art, and can be measured by testing methods and instruments known in the art.

With reference to Examples 1 to 24 and Comparative example 1 and with reference to Examples 25 to 27 and Comparative examples 4 to 6, compared with adding only a lithium-containing compound, the composite material according to the examples of this application can improve the capacity of the cell.

With reference to Examples 1 to 5, when the mass content of the carbon material is set to 1wt% to 40wt%, the cell has a higher capacity. When the mass content of the carbon material is set to 2wt% to 25wt%, and the composite material has a lower powder resistivity, and the cell has a higher capacity.

With reference to Examples 6 to 9, when the mass content of the catalyst is set to 0.1wt% to 20wt%, the cell has a higher capacity. When the mass content of the catalyst is set to 0.5wt% to 10wt%, the lithium-containing compound has a lower decomposition voltage while the cell has a higher capacity.

With reference to Examples 10 to 13, when the aspect ratio of the carbon material is set to 100:1 to 3000:1, and the cell has a higher capacity. When the aspect ratio of the carbon material is set to 200:1 to 2000:1, a risk of agglomeration of the carbon material is reduced, and the cell has a higher capacity.

With reference to Examples 14 to 17, when the mass ratio of the polymer to DMF is set to 1:1 to 1:20, and the cell has a higher capacity. When the mass ratio of the polymer to DMF is set to 1:2 to 1:15, and the cell has a higher capacity.

With reference to Examples 18 to 21, when the calcination temperature is set to 300°C to 480°C, the cell has a higher capacity. When the calcination temperature is set at 350°C to 450°C, a carbonization effect of the polymer material is better, and a carbon material with better crystallinity can be obtained. In addition, decomposition of the lithium-containing compound at a high temperature can be avoided, and the cell has a higher capacity.

With reference to Examples 22 to 24, the catalyst and the lithium-containing compound have smaller particle sizes, which is conducive to improving the catalytic effect of the catalyst and reducing the decomposition voltage of the lithium-containing compound. When the particle sizes of the catalyst and the lithium-containing compound are large, the catalytic effect of the catalyst is weakened, the decomposition voltage of the lithium-containing compound is lowered less, and the capacity of the cell is improved less.

With reference to Examples 25 to 27, the examples of this application are applicable to a plurality of different lithium-containing compounds. With reference to the Examples 28 and 29 and Examples 34 and 35, the examples of this application are applicable to a plurality of different catalysts.

With reference to Example 30, when the mass content of the carbon material is lower, the composite material has a higher powder resistivity. When the mass content of the catalyst is lower, the decomposition voltage of the lithium-containing compound is higher. When the aspect ratio of the carbon material is smaller, the improvement on the capacity of the cell is not apparent. In summary, the cell of this example has a lower capacity. With reference to Example 31, although the carbon material has a higher mass ratio, the mass ratio of the polymer to DMF is higher, and the content of the DMF is smaller. It is difficult to obtain a composite material having a good tubular structure by electrospinning. The composite effect of the lithium-containing compound and the carbon material is poor, the obtained composite material has a larger resistivity, and the cell has a lower capacity. With reference to Example 32, the mass content of the catalyst is larger, so that the mass content of the lithium-containing compound is lower. In addition, when the calcination temperature is higher, thermal decomposition of parts of the carbon material and the lithium-containing compound causes damage to the tubular structure, the resistivity of the composite material increases, and the cell has a lower capacity. With reference to Example 33, when the aspect ratio of the carbon material is larger, the carbon material is agglomerated to cause an increase in the resistivity of the powder of the composite material, and the cell has a lower capacity.

With reference to Comparative example 2, when only a manner in which the lithium-containing compound and the catalyst are mixed is used, the mixed material has a higher resistivity, and cannot overcome an adverse effect generated by vacancies after the lithium-containing compound decomposes, and the capacity of the cell is lower.

With reference to Comparative example 3, the decomposition voltage of the lithium-containing compound is higher when only the carbon-coated lithium-containing compound is used, which is adverse to improving the capacity of the cell. Although in Comparative example 3, in a manner of using only the carbon-coated lithium-containing compound, the resistivity of the powder and the resistance of the film are lower, normal use is difficult due to a higher decomposition voltage of the lithium-containing compound.

With reference to Example 36 and Comparative Examples 7 to 9, after the composite material of this example of this application is mixed with the positive electrode active material lithium iron phosphate, the cell prepared has a higher capacity.

Although the examples only show that lithium ferrite is used as the positive electrode active material, the composite material of this application is also applicable to a cell having another active material. Similarly, although only examples in which a transition metal oxide is used as a catalyst are shown, another catalyst that can be used to catalyze decomposition of the lithium-containing compound, such as a transition metal carbide or a transition metal nitride, is also applicable to the examples of this application.

It should be noted that the application is not limited to the foregoing embodiments. The foregoing embodiments are exemplary only, and any embodiment within the scope of the technical solution of this application that has substantially the same composition and has the same effects as the technical idea is encompassed in the technical scope of this application. In addition, without departing from the gist of this application, various modifications that may be conceived by a person skilled in the art to the embodiments, and other modes constructed by combining some of the constituent elements of the embodiments are also included in the scope of this application.

## Claims

1. A composite material, comprising: a lithium-containing compound, a catalyst, and a carbon material,
wherein
the carbon material has a hollow tubular structure, and the lithium-containing compound and the catalyst are arranged in the tubular structure;
the lithium-containing compound comprises lithium, carbon, and oxygen; and
the catalyst comprises at least one of a transition metal oxide, a transition metal carbide, or a transition metal nitride.

2. The composite material according to claim 1, wherein the lithium-containing compound and the catalyst are arranged on an inner wall of the tubular structure.

3. The composite material according to claim 1 or 2, wherein at least a part of the catalyst is located on a surface of the lithium-containing compound.

4. The composite material according to any one of claims 1 to 3, wherein a chemical formula of the lithium-containing compound is Li₂CₓO_{y}, wherein 1≤x≤4, and 3≤y≤6; and optionally, the lithium-containing compound comprises at least one of Li₂C₂O₄, Li₂CO₃, Li₂C₄O₄, Li₂C₃O₅, or Li₂C₄O₆.

5. The composite material according to any one of claims 1 to 4, wherein a chemical formula of the transition metal oxide is M_{α}O_{β}, wherein 0<α≤3, 0<β≤5, and M comprises at least one of Ni, Co, Fe, Mn, V, Cr, Cu, or Ti; and
optionally, M_{α}O_{β} comprises at least one of NiO, Co₃O₄, Fe₂O₃, MoO₃, or V₂O₅.

6. The composite material according to any one of claims 1 to 5, wherein the transition metal carbide comprises at least one of molybdenum carbide, vanadium carbide, tungsten carbide, titanium carbide, cobalt carbide, iron carbide, or nickel carbide; and/or the transition metal nitride comprises at least one of molybdenum nitride, vanadium nitride, titanium nitride, manganese nitride, cobalt nitride, iron nitride, or nickel nitride.

7. The composite material according to any one of claims 1 to 6, wherein based on a total mass of the composite material, a mass content A of the carbon material satisfies: 1wt%≤A≤40wt%; and optionally, A satisfies: 2wt%≤A≤25wt%.

8. The composite material according to any one of claims 1 to 7, wherein based on a total mass of the composite material, a mass content B of the catalyst satisfies: 0.1wt%≤B≤20wt%; and optionally, B satisfies: 0.5wt%≤B≤10wt%.

9. The composite material according to any one of claims 1 to 8, wherein based on a total mass of the composite material, a mass content C of the lithium-containing compound satisfies: 45wt%≤B≤98.9wt%; and optionally, C satisfies: 70wt%≤B≤85wt%.

10. The composite material according to any one of claims 1 to 9, wherein an aspect ratio E of the carbon material satisfies: 100:1≤E≤3000:1; optionally, E satisfies: 200:1≤E≤2000:1.

11. The composite material according to any one of claims 1 to 10, wherein in the composite material, a decomposition voltage V1 of the lithium-containing compound satisfies: V1<4.8 V; and optionally, V1 satisfies: V1<4.4 V.

12. The composite material according to any one of claims 1 to 11, wherein a resistivity P of the composite material satisfies: 0.2 Ω·cm<P<101 Ω·cm; and optionally, P satisfies: 0.2 Ω·cm<P<5.5 Ω·cm.

13. The composite material according to any one of claims 1 to 12, wherein an average volume particle size Dv¹50 of the lithium-containing compound is greater than an average volume particle size Dv²50 of the catalyst; and optionally, the average volume particle size Dv¹50 of the lithium-containing compound satisfies: 100 nm≤Dv¹50≤1000 nm, and the average volume particle size Dv²50 of the catalyst satisfies: 50 nm≤Dv²50≤500 nm.

14. A preparation method for the composite material according to any one of claims 1 to 13, comprising:
mixing a lithium-containing compound and a catalyst to obtain a mixed material of the lithium-containing compound and the catalyst, wherein the catalyst comprises at least one of a transition metal oxide, a transition metal carbide, or a transition metal nitride, and the lithium-containing compound comprises lithium, carbon, and oxygen;
adding the mixed material of the lithium-containing compound and the catalyst into a polymer material-containing slurry, to obtain an electrospinning stock solution;
performing electrospinning on the electrospinning stock solution, to obtain a precursor; and
performing calcination of the precursor in an inert atmosphere to obtain the composite material.

15. The method according to claim 14, wherein a chemical formula of the lithium-containing compound is Li₂CₓO_{y}, wherein 1≤x≤4, and 3≤y≤6; and optionally, the lithium-containing compound comprises at least one of Li₂C₂O₄, Li₂CO₃, Li₂C₄O₄, Li₂C₃O₅, or Li₂C₄O₆.

16. The method according to claim 14 or 15, wherein a chemical formula of the transition metal oxide is M_{α}O_{β}, wherein 0<α≤3, 0<β≤5, and M comprises at least one of Ni, Co, Fe, Mn, V, Cr, Cu, or Ti; and optionally, M_{α}O_{β} comprises at least one of NiO, Co₃O₄, Fe₂O₃, MoO₃, or V₂O₅.

17. The method according to any one of claims 14 to 16, wherein the transition metal carbide comprises at least one of molybdenum carbide, vanadium carbide, tungsten carbide, titanium carbide, cobalt carbide, iron carbide, or nickel carbide; and/or the transition metal nitride comprises at least one of molybdenum nitride, vanadium nitride, titanium nitride, manganese nitride, cobalt nitride, iron nitride, or nickel nitride.

18. The method according to any one of claims 14 to 17, wherein a solute in the polymer material-containing slurry comprises a polymer material, and a solvent in the polymer material-containing slurry is an organic solvent; and optionally, the organic solvent comprises N,N-dimethylformamide.

19. The method according to any one of claims 14 to 18, wherein the polymer material comprises at least one of polyvinyl pyrrolidone, polyacrylonitrile, or polyethylene oxide; and optionally, the polymer material comprises polyacrylonitrile.

20. The method according to claim 18 or 19, wherein a mass ratio D of the polymer material to the N,N-dimethylformamide satisfies: 1:20≤D≤1:1; and optionally, D satisfies: 1:15≤D≤1:2.

21. The method according to any one of claims 14 to 20, wherein a temperature T of the calcination satisfies: 300°C≤T≤480°C; and optionally, T satisfies: 350°C≤T≤450°C.

22. The method according to any one of claims 14 to 21, wherein the mixing a lithium-containing compound and a catalyst to obtain a mixed material of the lithium-containing compound and the catalyst comprises:
mixing the lithium-containing compound and the catalyst and performing high-energy ball milling, to obtain the mixed material comprising the lithium-containing compound and the catalyst.

23. The method according to claim 22, wherein a ball-to-material ratio F of the high-energy ball milling satisfies: 10:1≤F≤15:1; and/or a revolution speed R1 of the high-energy ball milling satisfies: 1000 r/min≤R1≤1500 r/min; and/or a rotation speed R2 of the high-energy ball milling satisfies: 2500 r/min≤R2≤ 3000 r/min.

24. The method according to any one of claims 14 to 23, wherein a mass ratio C of the lithium-containing compound to the catalyst satisfies: 15:1≤C≤40:1.

25. The method according to any one of claims 14 to 24, wherein an average volume particle size Dv¹50 of the lithium-containing compound is greater than an average volume particle size Dv²50 of the catalyst; and optionally, the average volume particle size Dv¹50 of the lithium-containing compound satisfies: 100 nm≤Dv¹50≤1000 nm, and the average volume particle size Dv²50 of the catalyst satisfies: 50 nm≤Dv²50≤500 nm.

26. A positive electrode plate, comprising:
a positive electrode active material; and
the composite material according to any one of claims 1 to 13, and/or the composite material prepared by using the method according to any one of claims 14 to 25.

27. The positive electrode plate according to claim 26, wherein a resistance R of the positive electrode plate satisfies: 0.3 Ω<R<0.5 Q.

28. A cell, comprising the positive electrode plate according to claim 26 or 27.

29. A battery, comprising the cell according to claim 28.

30. An electric device, comprising the battery according to claim 29.
